(19) Europäisches Patentamt
European Patent Office
Office européen des brevets

(11) **EP 2 808 708 B1**

(12) **EUROPEAN PATENT SPECIFICATION**

(45) Date of publication and mention
of the grant of the patent:
**19.10.2022 Bulletin 2022/42**

(51) International Patent Classification (IPC):
***G02B 3/06*** *(2006.01)*     ***G02B 5/00*** *(2006.01)*
***G02B 27/09*** *(2006.01)*

(21) Application number: **14170143.3**

(22) Date of filing: **28.05.2014**

(52) Cooperative Patent Classification (CPC):
**G02B 3/06; G02B 5/001; G02B 19/0014;
G02B 19/0052; G02B 27/0927; G02B 27/0966;
G02B 27/0972**

(54) **Optical element, projection optical system, and object detector**

Optisches Element, optisches Projektionssystem und Objektdetektor

Élément optique, système optique de projection et détecteur d'objet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2013 JP 2013113986**

(43) Date of publication of application:
**03.12.2014 Bulletin 2014/49**

(73) Proprietor: **Ricoh Company, Ltd.
Tokyo 143-8555 (JP)**

(72) Inventor: **Nakamura, Tadashi
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
WO-A1-95/18984     WO-A1-2004/102230
WO-A1-2012/071050     GB-A- 482 202
GB-A- 2 220 502     US-A- 2 759 393
US-A- 3 551 036     US-A- 5 109 161

EP 2 808 708 B1

**Description**

BACKGROUND

Technical Field

The present invention relates to an optical element, a projection optical system that includes the optical element, and an object detector that includes the projection optical system.

Background Art

Object detectors including a light source and a projection optical system, for detecting the presence of an object and the distance between a vehicle and the object, are known. The projection optical system includes optical elements that alter the state of the light beam emitted from the light source, and that irradiate an object to be detected with the light beam.

For example, vehicle-installed laser radars are known as an example of object detectors. A vehicle-installed laser radar detects the presence of an object in the direction of travel of a vehicle, or detects the distance between the vehicle and the object.

In such a laser radar, an object is irradiated with the laser light that is emitted from a light source and has passed through optical elements. Then, the light reflected or dispersed from the object is detected by a photodetector. By so doing, the laser radar detects the presence of an object existing in a specified area, or detects the distance between the vehicle and the object.

JP-2009-103529-A discloses an example of a laser radar that is not provided with a deflector such as a rotating mirror. The laser radar disclosed in JP-2009-103529-A scans a specified area by alternately turning on two or more light sources that are arranged in the scanning direction.

However, JP-2009-103529-A does not disclose the technique of using optical elements to irradiate a projection area with light beam having a desired intensity distribution (including even intensity distribution).

US 5,109,161 discloses an optical system arranged to detect a distance to an object to be photographed by projecting beams of light from a light-emitting element which emits visible light or infrared rays, and by receiving reflected light from the object at a light receiving element. The system includes a light projecting lens system having a plurality of optical axes and a spherical or aspherical surface on the side of the object and the plurality of planes for forming the plurality of optical axes on the side of the light-emitting element.

GB 2220502 A discloses an optical system consisting of one of more transmissive biprisms of fused silica which is used to transform the non-uniform output beam form a pulsed UV excimer laser into one with a more uniform energy distribution.

GB 482,202 discloses an optical scale-reading apparatus including a lens system having one lens which collimates and one lens which scatters a light beam.

US 2,759,393 discloses optical aligners employing axicons.

WO 2014/102230 A1 discloses emulsifier systems which may be used for stabilizing the interface between a fat phase and an aqueous phase of a food product. The emulsifier system comprises coffee particles having a particle size in the range of from about 0.1 $\mu$m to about 500$\mu$m, preferably from 1$\mu$m to 200$\mu$m. The invention also relates to food products using such an emulsifier system, and to methods for the manufacture of such food products.

WO 95/18984 A1 discloses an optical apparatus disclosing for reconfiguring a round laser beam having a gaussian-like intensity distribution into a square or rectangular beam having a uniform intensity distribution. A first optical element is used to divide the beam into two halves along a first axis. A second optical element is used to divide the beam in half along an axis perpendicular to the division created by the first optical element. The four segments of the beam are directed into an overlapping orientation. A lens is used to focus the beam in a target plane. The beam spot will have a square footprint with two sets of opposed straight edges. The intensity distribution will be substantially uniform across the spot permitting more uniform treatment of a workpiece.

US 3551036 A discloses a method and apparatus for stereoscopic photography.

WO 2012/071050 A1 discloses a beam shaper having a cartridge having opposite threaded ends and an optical system operative in the cartridge. The optical system is configured to shape a rotationally symmetrical, collimated input beam, which has a substantially Gaussian intensity distribution, into an output beam with a substantially uniform intensity distribution. The optical system is optionally configured with a combination of a cylindrical lens and a Fresnel biprism having a common focal plane. The lens and Fresnel prism are operative to shape the output beam into a polygonally-shaped beam spot on the surface to be laser treaded which is positioned in the focal plane of the optical system. Alternatively, the optical system has a conical lens configured to shape the output beam so that a beam spot on the surface, which is positioned in the focal plane, has a circular shape with the substantially uniform intensity distribution.

The present invention aims at providing optical elements that irradiate a projection area with light having a desired intensity distribution.

SUMMARY

The scope of the invention is defined by the appended claims. Any reference to "embodiment(s)", "example(s)" or "aspect(s) of the invention" in this description not falling under the scope of the claims should be interpreted as illustrative example(s) for understanding the invention.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is an XY-plan view of an object detector according to an example embodiment of the present invention.
FIG. 2 is a ZX-plan view of the object detector of FIG. 1, according to an example embodiment of the present invention.
FIG. 3 is a perspective view of a projection optical system, according to an example embodiment of the present invention.
FIG. 4 is a schematic diagram of a laser diode according to an example embodiment of the present invention.
FIG. 5 is an XY-plan view of an optical element according to an example embodiment of the present invention.
FIG. 6 illustrates the shape of an exit plane of the optical element of FIG. 5, according to an example embodiment of the present invention.
FIG. 7 is an XY-plan view illustrating an example of the shape of the second optical element, according to an example embodiment of the present invention.
FIG. 8 is a schematic diagram illustrating examples of the intensity distribution formed by a projection optical system, according to an example embodiment of the present invention.
FIG. 9 is an XY-plan view illustrating the light-receptive area of a light-receptive optical system of an object detector, according to an example embodiment of the present invention.
FIG. 10 is a ZX-plan view illustrating the light-receptive area of a light-receptive optical system of an object detector, according to an example embodiment of the present invention.
FIG. 11 is a schematic diagram illustrating the relationship between the intensity distribution formed by a projection optical system and the light-receptive area of a photodiode, according to an example embodiment of the present invention.
FIG. 12 is an XY-plan view of a projection optical system, according to another example embodiment of the present invention.
FIG. 13 is a ZX-plan view of the projection optical system of FIG. 12, according to another example embodiment of the present invention.
FIG. 14 is a perspective view of the projection optical system of FIG. 12, according to another example embodiment of the present invention.
FIG. 15 is an XY-plan view of an optical element according to another example embodiment of the present invention.
FIG. 16 is an XY-plan view of a second optical element provided for the projection optical system of FIG. 12, according to another example embodiment of the present invention.
FIG. 17 is a schematic diagram illustrating the differences between the intensity distribution of the light beam that is about to enter a first optical element provided for a projection optical system and the intensity distribution of the light beam that has entered the incidence plane of the first optical element, according to another example embodiment of the present invention.
FIG. 18 is a schematic diagram illustrating the intensity distribution of the light beam exiting from the first optical element provided for a projection optical system, according to another example embodiment of the present invention.
FIG. 19 is an XY-plan view illustrating a comparative example of an optical element.
FIG. 20 is a schematic diagram illustrating the intensity distribution of the light beam exiting from the optical element of FIG. 19.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

An optical element, projection optical system, and object detector according to example embodiments of the present invention will be described below with reference to the drawings.

<Object Detector (1)>

Firstly, an object detector according to an example embodiment of the present invention is described.

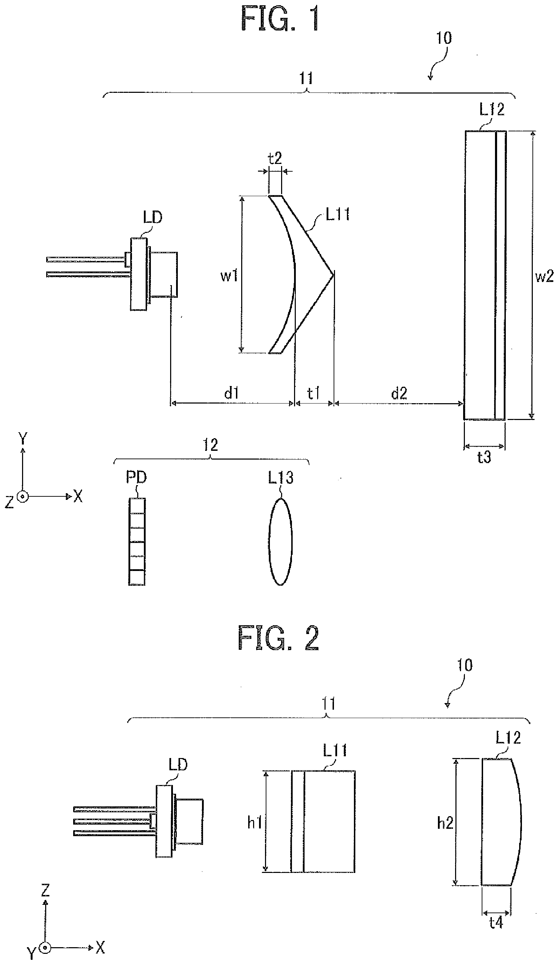

FIG. 1 is an XY-plan view of an object detector 10 according to an example embodiment of the present invention, and FIG. 2 is a ZX-plan view of the object detector 10. As illustrated in FIGS. 1 and 2, the object detector 10 includes a projection optical system 11 and a light-receptive optical system 12.

In FIG. 1, it is assumed that X-axis indicates the direction in which a laser diode (LD) emits light beam (light flux), and that Y-axis and Z-axis are perpendicular to the X-axis. Moreover, it is assumed in FIG. 1 that Y-axis indicates the horizontal direction, and Z-axis indicates the vertical direction.

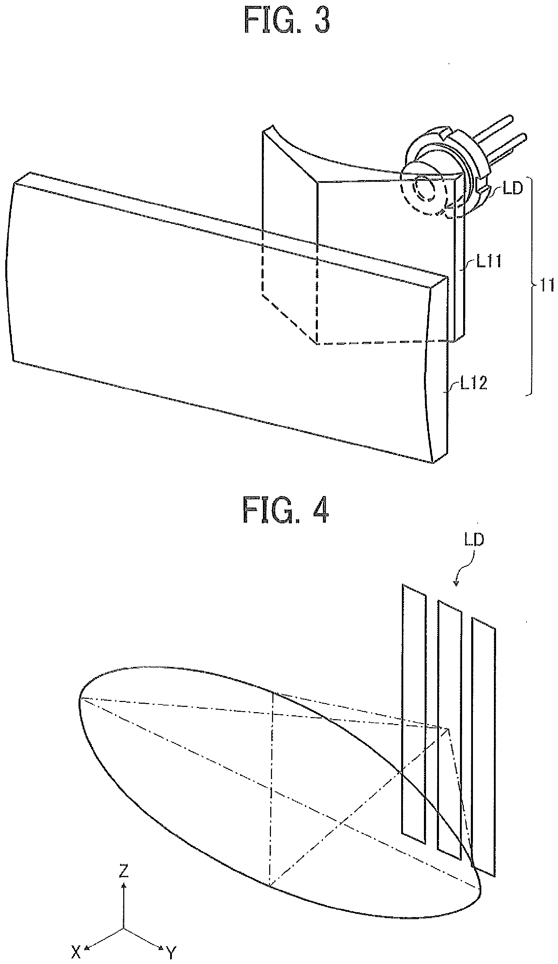

FIG. 3 is a perspective view of the projection optical system 11. The projection optical system 11 according to an example embodiment of the present invention includes an LD, a first optical element L11, and a second optical element L12.

The projection optical system 11 alters the state of the light beam emitted from the LD, and irradiates an object to be detected with the light beam.

The arrangement of the projection optical system 11 is described below with reference to FIG. 1. In the projection optical system 11, distance d1 between the light-emitting point of the LD and the incidence plane of the first optical element L11 is 10mm, and distance d2 between the exit plane of the first optical element L11 and the incidence plane of the second optical element L12 is 10mm.

Next, the size of the first optical element L11 is described below with reference to FIGS. 1 and 2. In the first optical element L11, the center thickness t1 is 3mm, and the edge thickness t2 is 1.1mm. The outer dimensions w1 in the horizontal direction is 12mm, and the outer dimensions h1 in the vertical direction is 8mm. The radius of curvature of the incidence plane is -10mm.

Next, the size of the second optical element L12 is described below with reference to FIGS. 1 and 2. In the second optical element L12, the center thickness t3 is 3mm, and the edge thickness t4 is 2.3mm. The outer dimensions w2 in the horizontal direction is 22mm, and the outer dimensions h2 in the vertical direction is 10mm. The radius of curvature of the exit plane is -18mm.

The light-receptive optical system 12 includes a photodiode (PD) and a third optical element L13.

<Projection Optical System (1)>

Next, the configuration of the projection optical system 11 is described.

The LD is an example of a light source according to an embodiment of the present invention. Generally, LDs emit light with the Gaussian intensity distribution. Moreover, LDs have wavelength suitable for object detection, for example, an infrared area of 905nm.

FIG. 4 is a schematic diagram of a LD according to an example embodiment of the present invention. In the LD, the angle of divergence in the horizontal direction (Y-axis direction) is different from the angle of divergence in the vertical direction (Z-axis direction) in the LD. As illustrated in FIG. 4, the angle of divergence in the horizontal direction (Y-axis direction) is greater than the angle of divergence in the vertical direction (Z-axis direction) in the LD.

However, the angle of divergence in the horizontal direction (Y-axis direction) may be less than the angle of divergence in the vertical direction (Z-axis direction) in the LD. Moreover, the LD may include a plurality of light emitting devices or a single light emitting device.

<First Optical Element (1)>

Next, the first optical element L11 is described below. The first optical element L11 is an optical element according to the first embodiment of the present invention.

When an object is to be detected, the projection optical system 11 distributes the light beam emitted from the LD over irradiation coverage with even intensity distribution that is broad in the horizontal direction. Note that the term irradiation coverage indicates an area with a specified distance from the projection optical system 11, and the area is irradiated with the light beam from the projection optical system 11 with specified light intensity.

Even intensity distribution indicates that the dispersion of light intensity distribution is within a specified range in the irradiation coverage, and that there is no peak of light intensity.

In other words, when irradiation coverage is irradiated with light beam with even intensity distribution, it is required that the first optical element L11 distribute the light beam in the horizontal direction and compensate for the shortage of light supply at an area with angle from the center (i.e., outer area of the irradiation coverage).

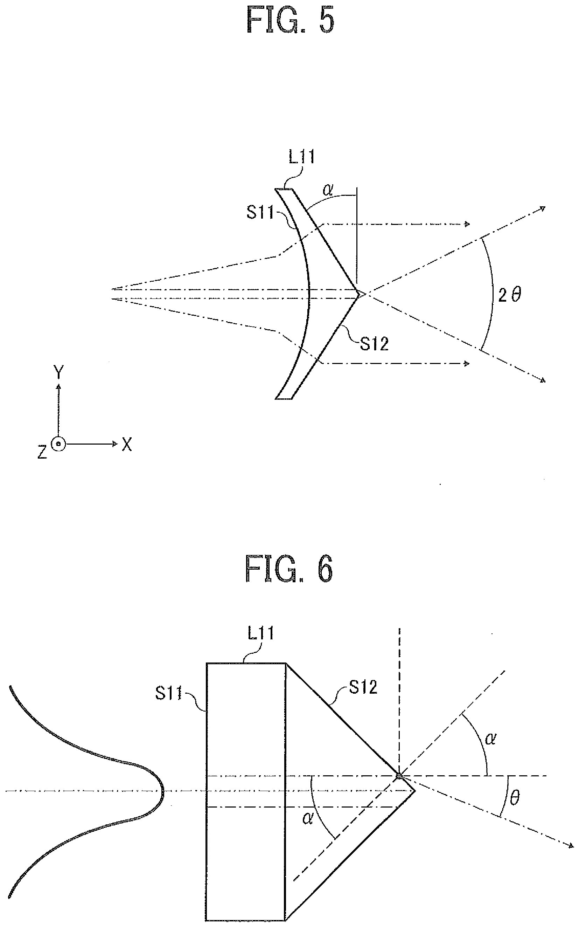

FIG. 5 is an XY-plan view of an optical element according to an example embodiment of the present invention. The shape of the first optical element L11 is determined in view of the relationship between an irradiation area of the LD and the irradiation coverage required of the first optical element L11.

The first optical element L11 includes an incidence plane S11 and an exit plane S12. Here, the incidence plane S11 and the exit plane S12 are refractive in one direction only (in the horizontal direction only in the present embodiment). In other words, the incidence plane S11 and the exit plane S12 extend with the same shape in one direction (in the vertical direction in the present embodiment).

<Shape of Incidence Plane and Exit Plane>

The basic form (e.g., concave surface, convex surface, and plane surface) and the profile such as radius of curvature of the incidence plane S11 are determined based on the angle of divergence of the light beam incident upon the incidence plane S11 and the irradiation coverage of the light beam exiting from the exit plane S12. The incidence plane S11 maybe curved to have an aspherical surface.

The incidence plane S11 is shaped to have a concave surface opposite the LD, such that the light beam emitted from the LD is refracted to the center of light emission to compensate for shortage of light quantity in outer areas of the irradiation coverage.

The exit plane S12 is composed of a plurality of planes (for example, two planes) that are jointed together. In other words, the exit plane S12 is shaped to have a gable roof where the jointed portions of the planes look like ridgelines. Due to such an arrangement, it becomes possible for the exit plane S12 to converge the light beam emitted from the LD around the center of light emission into one direction (i.e., the horizontal direction in the present embodiment).

FIG. 6 illustrates the shape of the exit plane S12, according to an example embodiment of the present invention. As illustrated in FIG, 6, the joint angle of the exit plane S12 is set such that the light beam incident on the joint of the two planes of the exit plane S12 from the LD irradiates the irradiation coverage at a certain distance to its edges.

The shape of the exit plane S12 is expressed in Equation 1 below.

[Equation 1]

$$n \cdot \sin\alpha = n' \cdot \sin(\alpha + \theta)$$

$$= n'(\sin\alpha \cdot \cos\theta + \sin\theta \cdot \cos\alpha)$$

, where $\alpha$ indicates the angle between each of the planes that form the exit plane and a plane perpendicular to the direction of travel of the light incident on the incidence plane, $\theta$ indicates half the glancing angle of an end of the irradiation coverage that is away from the center of light emission by a specified distance, n indicates the reflective index of the first optical element, and n' indicates the reflective index of a medium other than the first optical element. Equation 1 is modified as follows.

[Equation 2]

$$(n - n' \cdot \cos\theta) \cdot \sin\alpha = n'(\sin\theta \cdot \cos\alpha)$$

[Equation 3]

$$\tan\alpha = \sin\alpha/\cos\alpha = \sin\theta/n-n'\cdot\cos\theta$$

According to Equations 2 and 3, the shape of the exit plane S12 can be expressed as follows.

[Equation 4]

$$\alpha = \tan^{-1}(\sin\theta/n-n'\cdot\cos\theta)$$

When the medium outside the first optical element is air, the reflective index n'=1. Thus, Equation 4 is modified as below.

[Equation 4-1]

$$\alpha = \tan^{-1}(\sin\theta/n-\cos\theta)$$

<Relationship between Shape of Incidence Plane and Shape of Exit Plane>

Table 1 shows the relationship between the shape of the incidence plane S11 and the shape of the exit plane S12.
In Table 1, "o" indicates that the surface is shaped to alter the direction of travel of the light beam that has reached the incidence plane or exit plane, and "-" indicates that the surface is not shaped to alter the direction of travel of the light beam that has reached the incidence plane or exit plane. The same applies to Tables 2 and 3 described below.

[Table 1]

| Plane | Incident Plane | | | | Exit Plane | | |
|---|---|---|---|---|---|---|---|
| Horizontal Direction | o | - | o | - | o | - | o |
| Vertical Direction | - | o | o | - | - | o | o |
| Combination of Shape | A | B | C | D | X | Y | Z |

As shown in Table 1, it is assumed in the first optical element L11 that the combinations of shape for altering the direction of travel of the light beam incident on the incidence plane S11 are referred to as A, B, and C, and that the combinations of shape for altering the direction of travel of the light beam incident on the exit plane S12 are referred to as X, Y, and Z.
The combination of the incidence plane S11 and the exit plane S12 in regard to refractive power may be selected from twelve patterns of A-X, A-Y, A-Z, B-X, B-Y, B-Z, C-X, C-Y, C-Z, D-X, D-Y, and D-Z.

<Second Optical Element>

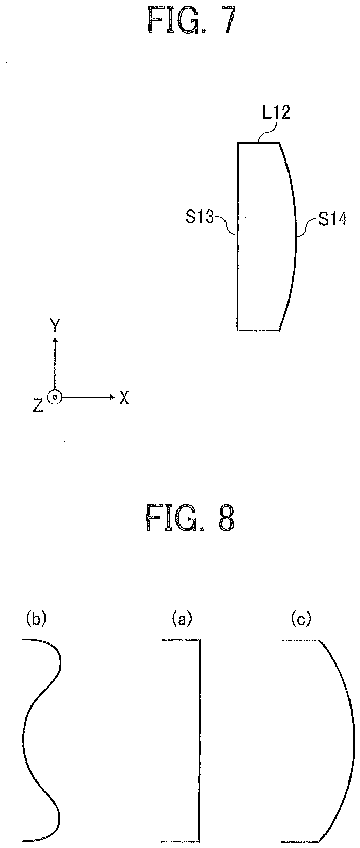

FIG. 7 is an XY-plan view illustrating an example of the shape of the second optical element L12, according to an example embodiment of the present invention. The second optical element L12 receives the light beam exiting from the first optical element L11, and irradiates the irradiation coverage with the light beam. The second optical element L12 is, for example, a cylindrical lens that is refractive such that the first optical element L11 will not be refractive.
Here, the second optical element L12 compensates for the lack of refractive power of the first optical element L11 such that the irradiation coverage is irradiated with the light beam of desired intensity, and adjusts the intensity distribution of light emission. For this reason, the second optical element L12 should be refractive in at least one of the horizontal and vertical directions. In FIG. 7, the second optical element L12 is refractive in Y-direction.
Note that the second optical element L12 may have a different shape as long as it is shaped to compensate for the lack of refractive power of the first optical element L11 and to adjust the intensity distribution of light emission.
The second optical element L12 has a plane surface on the incidence plane S13, and has a convex surface on the exit plane S14. Moreover, the second optical element L12 extends (sweeps) with the same shape in one direction (in the direction of Y-axis in FIG. 7).
Note that the shape of the second optical element L12 is not limited to that of the incidence plane S13 or the exit plane S14. For example, the incidence plane S13 may have a concave surface.

<Relationship between Shape of First Optical Element and Shape of Second Optical Element>

Table 2 depicts the relationship between shape of the first optical element L11 and the shape of the second optical element L12.

[Table 2]

| Optical Element | First Optical Element | | | | Second Optical Element | | |
|---|---|---|---|---|---|---|---|
| Horizontal Direction | o | - | o | - | o | - | o |
| Vertical Direction | - | o | o | - | - | o | o |
| Combination of Shape having Light-gathering Power | P | Q | R | S | T | U | V |

As shown in Table 2, it is assumed in the projection optical system 11 that the combinations of shape having light-gathering power in the horizontal and vertical directions of the first optical element L11 are referred to as P, Q, R, and S, and that the combinations of shape having light-gathering power in the horizontal and vertical directions of the second optical element L12 are referred to as T, U, and V.

The combinations of the shapes of the first optical element L11 having light-gathering power and the shapes of the second optical element L12 having light-gathering power may be selected from twelve patterns of P-T, P-U, P-V, Q-T, Q-U, Q-V, R-T, R-U, R-V, S-T, S-U, and S-V.

FIG. 8 is a schematic diagram illustrating examples of the intensity distribution formed by the projection optical system 11, according to an example embodiment of the present invention. In FIG. 8, the vertical axis indicates the angle between the irradiation coverage and the center of light emission, and the vertical axis indicates the intensity of light emission.

As depicted in (a) of FIG. 8, the projection optical system 11 may achieve uniform intensity distribution of light emission over the irradiation coverage. As depicted in (b) of FIG. 8, the projection optical system 11 may also increase the intensity of light emission at edges of the irradiation coverage. As depicted in (c) of FIG. 8, the projection optical system 11 may increase the intensity of light emission at a center portion of the irradiation coverage. In other words, the projection optical system 11 can achieve a desired intensity distribution like (b) and (c) of FIG. 8 depending on the configuration.

According to the projection optical system 11, a desired intensity distribution including uniform intensity distribution can be achieved in the irradiation coverage.

<Configuration of Light-receptive Optical System>

The third optical element L13 receives the light beam that is reflected or dispersed at an object placed within the irradiation coverage, and forms an image on the light receiving surface of a PD.

The PD is a photodetector that receives the light beam that is reflected or dispersed at an object placed within the irradiation coverage and is shaped by the third optical element L13, and that detects the object placed within the irradiation coverage.

The PD may be an Avalanche photodiode (APD) or a normal pin PD.

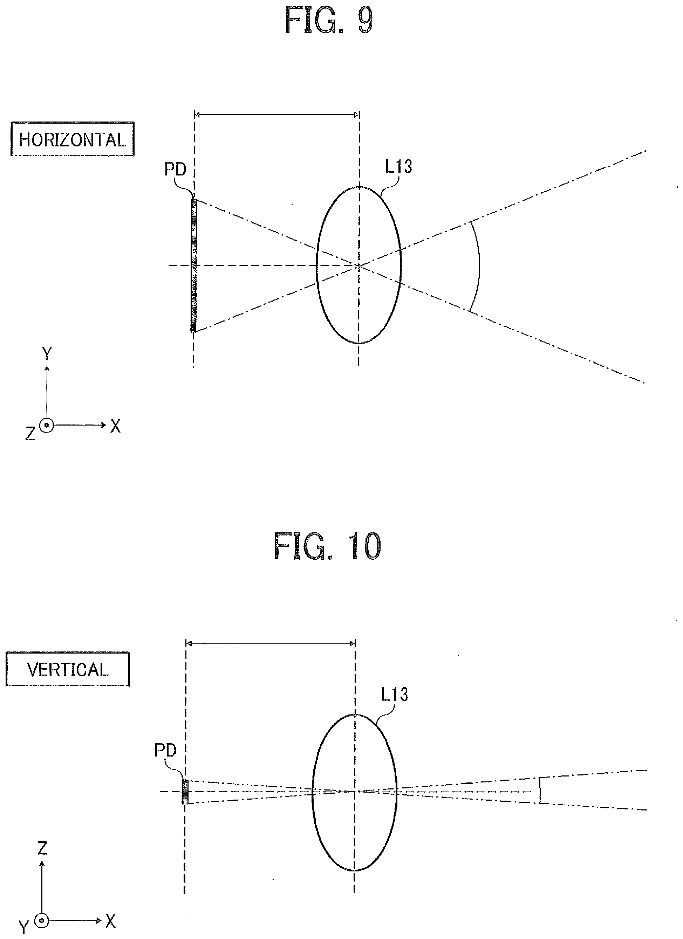

FIG. 9 is an XY-plan view illustrating the light-receptive area of the light-receptive optical system 12, according to an example embodiment of the present invention. FIG. 10 is an ZX-plan view illustrating the light-receptive area of the light-receptive optical system 12, according to an example embodiment of the present invention. In FIGS. 9 and 10, the PD is composed of an array of photodiodes. As illustrated in FIGS. 9 and 10, the sensor of the PD is wider in the horizontal direction than in the vertical direction. Thus, the acceptance angle (i.e., light-receptive area) is greater in the horizontal direction.

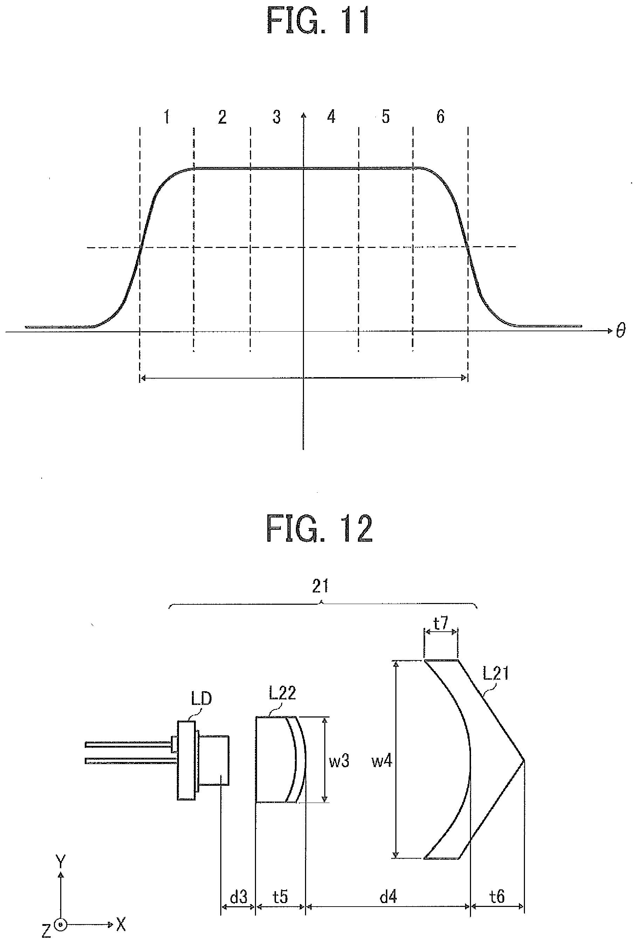

FIG. 11 is a schematic diagram illustrating the relationship between the intensity distribution formed by the projection optical system 11 and the light-receptive area of the PD, according to an example embodiment of the present invention. As illustrated in FIG. 11, the light-receptive area of the PD is divided into sections for each array. Accordingly, the positions of the irradiation coverage from which light is reflected can be determined.

<Projection Optical System (2)>

Next, a projection optical system according to another embodiment of the present invention is described, mainly concerning the differences from the previously described embodiment.

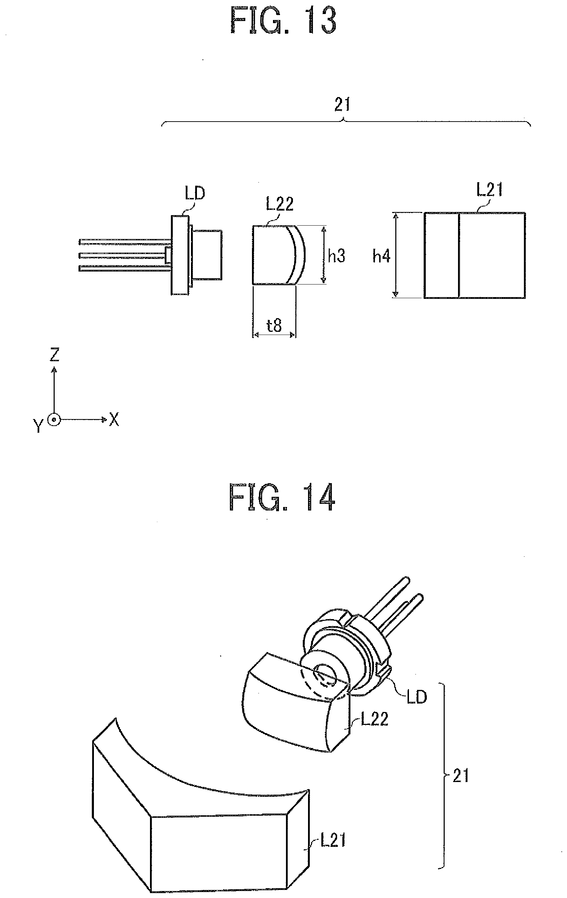

FIG. 12 is an XY-plan view of a projection optical system, according to an example embodiment of the present invention. FIG. 13 is a ZX-plan view of the projection optical system 21 of FIG. 12. FIG. 14 is a perspective view of the projection optical system 21 of FIG. 12. As illustrated in FIGS. 12, 13, and 14, the arrangement of the first optical element L21 and the second optical element L22 in the projection optical system 21 is different from that of the projection optical system 11 described above.

In other words, in the projection optical system 21, the second optical element L22 shapes the light beam emitted from the LD. According to the projection optical system 21, the first optical element L21 then shapes the light beam emitted from the second optical element L22, and a desired intensity distribution including uniform intensity distribution can be achieved in the irradiation coverage.

The arrangement of the projection optical system 21 is described below with reference to FIG. 12. In the projection optical system 21, distance d3 between the light-emitting point of the LD and the incidence plane of the second optical element L22 is 3mm, and distance d4 between the exit plane of the second optical element L22 and the incidence plane of the first optical element L21 is 11.5mm.

Next, the size of the first optical element L21 is described below with reference to FIGS. 12 and 13. In the first optical element L21, the center thickness t6 is 4mm, and the edge thickness t7 is 2.1mm. The outer dimensions w4 in the horizontal direction is 14mm, and the outer dimensions h4 in the vertical direction is 6mm. The radius of curvature of the incidence plane is -9mm.

Next, the size of the second optical element L22 is described below with reference to FIGS. 12 and 13. In the second optical element L22, the center thickness t5 is 3.5mm, and the edge thickness t8 is 2.1mm. The outer dimensions w3 in the horizontal direction is 6mm, and the outer dimensions h3 in the vertical direction is 4mm. The radii of curvature of the exit plane are -7.5mm and -3.5mm, on the horizontal and vertical planes, respectively.

<First Optical Element (2)>

Next, the first optical element L21 that is an optical element according to another embodiment of the present invention is described.

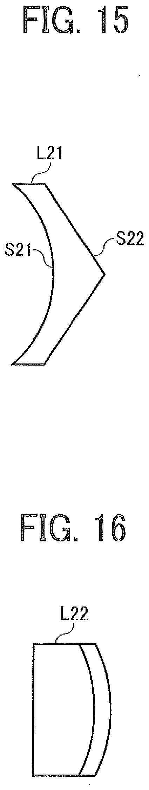

FIG. 15 is an XY-plan view of the first optical element L21, according to an example embodiment of the present invention. The shape of the first optical element L21 is determined in view of the relationship between the light beam shaped by the second optical element L22 and the irradiation coverage required of the first optical element L21.

In other words, in a similar manner to the first optical element L11 described above, it is required that the first optical element L21 distribute the light beam in the horizontal direction and compensate for the shortage of light quantity at an area with angle from the center (i.e., outer area of the irradiation coverage).

The first optical element L21 includes an incidence plane S21 and an exit plane S22. Here, the incidence plane S21 and the exit plane S22 have shape for changing the direction of travel of the light beam in one direction only (in the horizontal direction only in the present embodiment). In other words, the incidence plane S21 and the exit plane S22 extend (sweeps) with the same shape in one direction (in the vertical direction in the present embodiment).

<Shape of Incidence Plane and Exit Plane>

In a similar manner to the first optical element L11 described above, the basic form and the profile such as radius of curvature of the incidence plane S21 are determined based on the angle of divergence of the light beam incident upon the incidence plane S21 and the irradiation coverage of the light beam exiting from the exit plane S22. The incidence plane S21 may be curved to have an aspherical surface.

The incidence plane S21 is shaped to have a concave surface opposite the second optical element L22, such that the light beam emitted from the second optical element L22 is refracted to the center of light emission to compensate for shortage of light quantity in outer areas of the irradiation coverage.

In a similar manner to the first optical element L11 described above, the exit plane S22 is also composed of a plurality of planes (for example, two planes) that are jointed together. Due to such an arrangement, it becomes possible for the exit plane S22 to converge the light beam exiting from the second optical element L22 into one direction (i.e., the horizontal direction in the present embodiment).

In a similar manner to the first optical element L11 described above, the shape of the exit plane S22 is expressed as Equation 4 below.

[Equation 4]

$$\alpha = \tan^{-1}(\sin\theta / n - n' \cdot \cos\theta)$$

<Relationship between Shape of Incidence Plane and Shape of Exit Plane>

In a similar manner to the first optical element L11 described above, the combination of the shape of the incidence plane S21 and the shape of the exit plane S22 may be selected from twelve patterns of A-X, A-Y, A-Z, B-X, B-Y, B-Z, C-X, C-Y, C-Z, D-X, D-Y, and D-Z depicted in Table 1.

<Second Optical Element>

FIG. 16 is an XY-plan view of the second optical element L22 provided for the projection optical system 21. The second optical element L22 receives the light beam emitted from the LD, and emits the shaped light beam to the first optical element L21. The second optical element L22 is, for example, a toroidal lens that is refractive in a plurality of directions. Note that the shape of the second optical element L22 is not limited to a toroidal shape, but may have a different shape as long as it is shaped to effectively deliver the light from the LD to the first optical element L21.

Here, the second optical element L22 compensates for the lack of refractive power of the first optical element L21 such that the irradiation coverage is irradiated with the light beam of desired intensity, and adjusts the intensity distribution of light emission. For this reason, the second optical element L22 should be refractive in both the horizontal and vertical directions.

For example, the second optical element L22 has a plane surface on an incidence plane S23, and has a convex surface on an exit plane S24 where the curvature in the horizontal direction is different from the curvature in the vertical direction.

Note that the shape of the second optical element L22 is not limited to the shape of the incidence plane S23 and the exit plane S24 described above. For example, the incidence plane S23 may have a concave surface.

Relationship between Shape of First Optical Element and Shape of Second Optical Element

Table 3 depicts the relationship between the shape of the first optical element L21 and the shape of the second optical element L22.

[Table 3]

| Optical Element | First Optical Element | | | | Second Optical Element | | |
|---|---|---|---|---|---|---|---|
| Horizontal Direction | o | - | o | - | o | - | o |
| Vertical Direction | - | o | o | - | - | o | o |
| Combination of shape having light-gathering power | P | Q | R | S | T | U | V |

As shown in Table 3, it is assumed in the projection optical system 21 that the combinations of shape having light-gathering power in the horizontal and vertical directions of the first optical element L21 are referred to as P, Q, R, and S, and that the combinations of shape having light-gathering power in the horizontal and vertical directions of the second optical element L22 are referred to as T, U, and V.

The combinations of the shapes of the first optical element L11 having light-gathering power and the shapes of the second optical element L12 having light-gathering power may be selected from twelve patterns of P-T, P-U, P-V, Q-T, Q-U, Q-V, R-T, R-U, R-V, S-T, S-U, and S-V.

In a similar manner to the projection optical system 11 described above, as depicted in (a) of FIG. 8, the projection optical system 21 may achieve uniform intensity distribution of light emission over the irradiation coverage. As depicted in (b) of FIG. 8, the projection optical system 21 may increase the intensity of light emission at edges of the irradiation coverage. As depicted in (c) of FIG. 8, the projection optical system 21 may increase the intensity of light emission at a center portion of the irradiation coverage. In other words, the projection optical system 21 can achieve a desired intensity distribution like (b) and (c) of FIG. 8 depending on the configuration.

According to the projection optical system 21, a desired intensity distribution including uniform intensity distribution can be achieved in the irradiation coverage.

<Changes in Intensity Distribution due to Shape of Incidence Plane of First Optical Element>

Next, changes in the intensity distribution due to the shape of the incidence plane of the first optical element L11 are described.

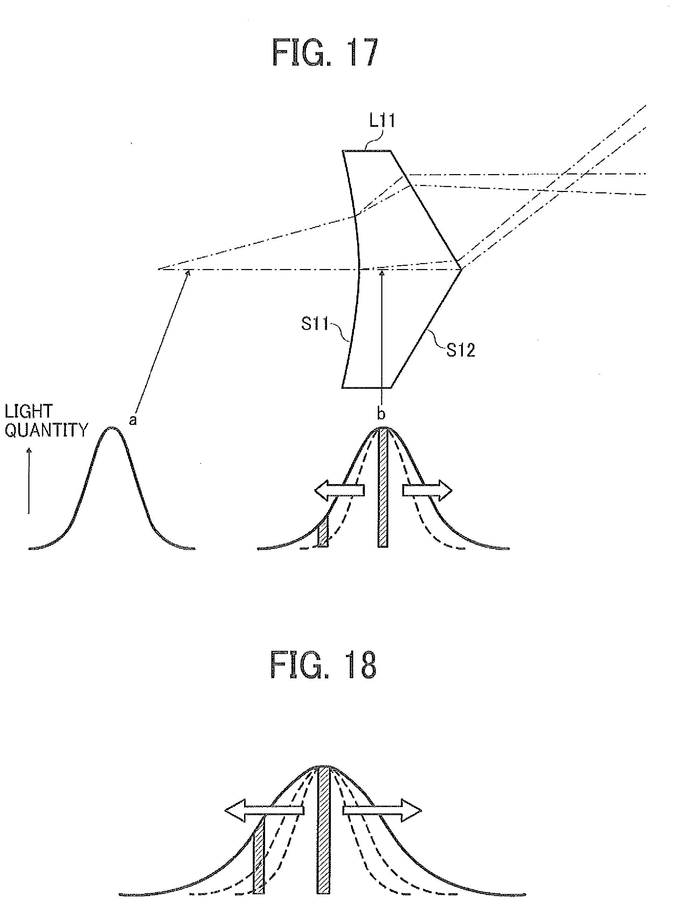

FIG. 17 is a schematic diagram illustrating the differences between the intensity distribution of the light beam that is about to enter the first optical element L11 and the intensity distribution of the light beam that has entered the incidence plane S11. As illustrated in FIG. 17, intensity distribution b of the light beam that has entered the incidence plane S11 has an intensity distribution of light emission with a wider angle in comparison to intensity distribution a that is about to enter the first optical element L11.

FIG. 18 is a schematic diagram illustrating the intensity distribution of the light beam exiting from the first optical element L11. As illustrated in FIG. 18, the light beam exiting from the first optical element L11 has intensity distribution of light emission with a wider angle. In other words, according to the first optical element L11, a desired intensity distribution can be generated by changing the light-gathering power on the incidence plane S11 to vary the light quantity around the center of light emission.

<Comparative Example>

Next, a comparative example of an optical element according to an embodiment of the present invention is described.

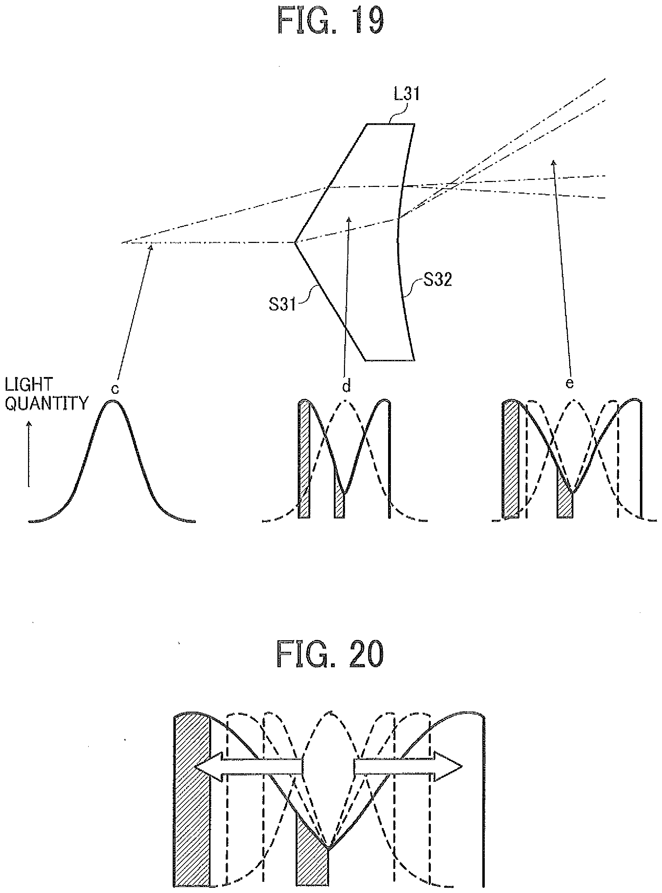

FIG. 19 is an XY-plan view illustrating a comparative example of an optical element. As illustrated in FIG. 19, an optical element L31 according to the comparative example has the shape of the exit plane S12 of the first optical element L11 on the LD side.

In other words, the incidence plane S31 of the optical element L31 has the shape of the exit plane S12 of the first optical element L11. Moreover, the exit plane S32 of the optical element L31 has the shape of the incidence plane S11 of the first optical element L11.

In FIG. 19, intensity distribution c of the light beam that is about to enter the first optical element L31, intensity distribution d of the light beam that has entered the incidence plane S31, and intensity distribution e of the light beam that has exited the exit plane S32 are illustrated. A comparison of intensity distributions c, d, and e shows an increase in intensity distribution e on the periphery of the irradiation coverage.

FIG. 20 is a schematic diagram illustrating the intensity distribution of the light beam exiting from the optical element L31. As illustrated in FIG. 20, the optical element L31 fails to achieve a desired intensity distribution including uniform intensity distribution in the irradiation coverage.

**Claims**

1. An object detector, comprising:

    a projection optical system (11, 21), and
    a light-receptive optical system (12);
    the projection optical system comprising:

       a light source (LD), and
       an optical element (L11, L21), wherein light emitted from the light source (LD) is incident on the optical element (L11, L21), the optical element being configured to change an intensity distribution of a light beam emitted from the light source in a first direction, the optical element comprising:

          a concave incidence surface (S11, S21) on which the light beam is incident; and
          an exit surface (S12, S22) which is composed of two planes that are joined together to form a ridge line orthogonal to the first direction, thereby forming a convex surface in an exiting direction of the light beam,
          wherein the optical element (L11, L21) has a constant cross-sectional profile along the ridge line,
          wherein the projection optical system is configured to irradiate an object to be detected with the light beam and the light-receptive optical system (12) is configured to receive light reflected off the object.

2. The object detector according to claim 1, wherein the exit surface (S12, S22) is formed by two planes and wherein the following equation holds:

$$\alpha=\tan^{-1}(\sin\theta/n\text{-}n'\cdot\cos\theta),$$

where $\alpha$ indicates an angle between each of the planes that form the exit surface (S12, S22) and a plane perpendicular to a direction of travel of light incident on the incidence plane (S11, S21), $\theta$ indicates a half-angle of the irradiation coverage, n indicates a reflective index of the optical element (L11, L21), and n' indicates a reflective index of a medium surrounding the optical element (L11, L21).

3. The object detector according to claim 1, further comprising a second optical element (L12, L22) to which light emitted from the light source (LD) is incident, the second optical element (L12, L22) being configured to refract light into a plurality of directions.

4. The object detector according to claim 3, wherein the second optical element (L12, L22) is a toroidal lens.

**Patentansprüche**

1. Objektdetektor, umfassend:

ein optisches Projektionssystem (11, 21), und
ein lichtempfindliches optisches System (12);
das optische Projektionssystem umfasst:

eine Lichtquelle (LD), und
ein optisches Element (L11, L21), wobei von der Lichtquelle (LD) emittiertes Licht auf das optische Element (L11, L21) einfällt, wobei das optische Element so konfiguriert ist, dass es eine Intensitätsverteilung eines von der Lichtquelle emittierten Lichtstrahls in einer ersten Richtung ändert, wobei das optische Element umfasst:

eine konkave Einfallsfläche (S11, S21), auf die der Lichtstrahl auftrifft; und
eine Austrittsfläche (S12, S22), die aus zwei Ebenen besteht, die miteinander verbunden sind, um eine Gratlinie orthogonal zur ersten Richtung zu bilden, wodurch eine konvexe Fläche in einer Austrittsrichtung des Lichtstrahls gebildet wird,
wobei das optische Element (L11, L21) ein konstantes Querschnittsprofil entlang der Rippenlinie aufweist,
wobei das optische Projektionssystem so konfiguriert ist, dass es ein zu erfassendes Objekt mit dem Lichtstrahl bestrahlt, und das optische Lichtempfangssystem (12) so konfiguriert ist, dass es von dem Objekt reflektiertes Licht empfängt.

2. Objektdetektor nach Anspruch 1, bei dem die Austrittsfläche (S12, S22) durch zwei Ebenen gebildet wird und wobei die folgende Gleichung gilt:

$$\alpha=\tan^{-1}(\sin\theta/n\text{-}n'\cdot\cos\theta),$$

wobei $\alpha$ einen Winkel zwischen jeder der Ebenen, die die Austrittsfläche (S12, S22)
bilden, und einer Ebene senkrecht zu einer Bewegungsrichtung des auf die Einfallsebene (S11, S21) einfallenden Lichts angibt, $\theta$ einen Halbwinkel der Bestrahlungsabdeckung angibt, n einen Reflexionsindex des optischen Elements (L11, L21) angibt und n' einen Reflexionsindex eines das optische Element (L11, L21) umgebenden Mediums angibt.

3. Objektdetektor nach Anspruch 1, der ferner ein zweites optisches Element (L12, L22) umfasst, auf das von der Lichtquelle (LD) emittiertes Licht einfällt, wobei das zweite optische Element (L12, L22) so konfiguriert ist, dass es Licht in eine Vielzahl von Richtungen bricht.

4. Objektdetektor nach Anspruch 3, bei dem das zweite optische Element (L12, L22) eine toroidale Linse ist.

**Revendications**

1. Détecteur d'objet, comprenant :

   un système optique de projection (11, 21) et
   un système optique photorécepteur (12) ;
   le système optique de projection comprenant :

   une source lumineuse (LD), et
   un élément optique (L11, L21), dans lequel la lumière émise par la source lumineuse (LD) est incidente sur l'élément optique (L11, L21), l'élément optique étant configuré pour modifier une distribution d'intensité d'un faisceau lumineux émis depuis la source lumineuse dans une première direction, l'élément optique comprenant :

   une surface d'incidence concave (S11, S21) sur laquelle le faisceau lumineux est incident ; et
   une surface de sortie (S12, S22) qui est composée de deux plans qui sont reliés ensemble pour former une ligne de crête orthogonale à la première direction, formant ainsi une surface convexe dans une direction de sortie du faisceau lumineux,
   dans lequel l'élément optique (L11, L21) a un profil en coupe constant le long de la ligne de crête,
   dans lequel le système optique de projection est configuré pour irradier un objet à détecter avec le faisceau lumineux et le système optique photorécepteur (12) est configuré pour recevoir la lumière réfléchie par l'objet.

2. Détecteur d'objet selon la revendication 1, dans lequel la surface de sortie (S12, S22) est formée de deux plans et dans lequel l'équation suivante est vraie :

$$\alpha = \tan^{-1}\left(\sin\frac{\theta}{n} - n' \cdot \cos\theta\right)$$

   où $\alpha$ indique un angle entre chacun des plans qui forment la surface de sortie (S12, S22) et un plan perpendiculaire à une direction de déplacement de la lumière incidente sur le plan d'incidence (S11, S21), $\theta$ indique un demi-angle de la couverture d'irradiation, n indique un indice de réflexion de l'élément optique (L11, L21), et n'indique un indice de réflexion d'un milieu entourant l'élément optique (L11, L21).

3. Détecteur d'objet selon la revendication 1, comprenant en outre un second élément optique (L12, L22) auquel la lumière émise par la source de lumière (LD) est incidente, le second élément optique (L12, L22) étant configuré pour réfracter la lumière en une pluralité de directions.

4. Détecteur d'objet selon la revendication 3, dans lequel le second élément optique (L12, L22) est une lentille toroïdale.

# FIG. 1

# FIG. 2

# FIG. 3

# FIG. 4

# FIG. 5

# FIG. 6

# FIG. 7

L12

S13  S14

Y

Z  →X

# FIG. 8

(b)  (a)  (c)

# FIG. 9

# FIG. 10

# FIG. 11

# FIG. 12

# FIG. 13

# FIG. 14

## FIG. 15

## FIG. 16

# FIG. 17

# FIG. 18

## FIG. 19

## FIG. 20

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009103529 A
- US 5109161 A
- GB 2220502 A
- GB 482202 A
- US 2759393 A
- WO 2014102230 A1
- WO 9518984 A1
- US 3551036 A
- WO 2012071050 A1